# EUROPÄISCHE PATENTANMELDUNG

(11) **EP 0 715 166 A1**
(43) Veröffentlichungstag der Anmeldung: **05.06.1996**
(21) Anmeldenummer: 95115189.3
(22) Anmeldetag: 27.09.1995
(51) Int. Cl.: G01N 21/90

(54) **Verfahren und Vorrichtung zur Prüfung einer Mehrwegflasche auf Verunreinigungen**

(30) Priorität: 28.11.1994 CH 3578/94
(71) Anmelder: ELPATRONIC AG, CH-6303 Zug (CH)
(72) Erfinder: Pirani, Peter, CH-8624 Grüt (CH); Wildmann, Daniel, Dr., CH-8157 Dielsdorf (CH); Rosatzin, Martin, Dr., CH-8953 Dietikon (CH)

(57) **Zusammenfassung**

Zur Prüfung einer Flasche (1) auf Verunreinigungen wird der Flaschenboden seitlich von Messlicht (7) aus einer Quelle (2) beaufschlagt. Dieses Messlicht wird in der ringförmig am Flaschenboden vorhandenen Restflüssigkeit (3) in der Art eines Wellenleiters abgelenkt. Licht (8), welches die Restflüssigkeit wieder verlässt, wird über eine Abbildungsoptik (4) auf einen Detektor (5) abgebildet. Der Detektor misst die spektrale Zusammensetzung des abgestreuten Lichts (8) und vergleicht diese mit Sollwerten, welche aufgrund der zum letzen Mal in die Flasche abgefüllten Flüssigkeit zu erwarten wären. Bei grossen Abweichungen von den Sollwerten wird die Flasche ausgeschieden.

Das beschriebene Verfahren erlaubt es, in einfacher Weise festzustellen, ob eine Mehrwegflasche eine Fremdflüssigkeit enthalten hat.

## Beschreibung

Die Erfindung betrifft ein Verfahren zur Prüfung einer Mehrwegflasche, insbesondere einer Mehrweg-PET-Flasche, auf Verunreinigungen sowie eine Vorrichtung zur Ausführung des Verfahrens gemäss den Oberbegriffen der unabhängigen Ansprüche.

Bei der Wiederverwendung von Flaschen, insbesondere von Kunststoff-Flaschen, sollte geprüft werden, ob sich in den zurückgeführten Flaschen Verunreinigungen befinden, die das Füllprodukt beeinträchtigen könnten. Hierzu werden normalerweise Messungen in der Gasphase des Flascheninnern vorgenommen, wie z. B. chemische Analyseverfahren, IR-Spektroskopie oder Massenspektroskopie. Es gibt jedoch Verunreinigungen, die sich auf diese Weise nicht feststellen lassen und die das Füllprodukt dennoch beeinträchtigen können.

Es stellt sich deshalb die Aufgabe, ein Verfahren bzw. eine Vorrichtung bereitzustellen, die auch Verunreinigungen detektieren kann, welche durch die gängigen Methoden nicht oder nur schwer feststellbar sind. Diese Aufgabe wird durch die unabhängigen Patentansprüche erfüllt.

Die Messung optischer Eigenschaften einer sich in der Flasche befindlichen Restflüssigkeit kann auch Verunreinigungen ermitteln, die in der Gasphase nicht feststellbar sind. Vorzugsweise wird hierzu ein Bodenbereich der Flasche beleuchtet und das transmittierte Licht spektral analysiert, um zum Beispiel seine Farbe festzustellen. Die optischen Eigenschaften der Restflüssigkeit können mit Sollwerten verglichen werden. Flaschen, die Restflüssigkeiten enthalten, deren optische Eigenschaften nicht jenen der zuletzt in die Flasche abgefüllten Flüssigkeit entsprechen, werden normalerweise ausgeschieden.

Damit auch Flaschen untersucht werden können, die sehr wenig oder nur ausgetrocknete Restmaterialien enthalten, kann vor der Messung eine Verdünnflüssigkeit eingespritzt werden. Bei der Verdünnflüssigkeit kann es sich zum Beispiel um Wasser oder um eine farblose wässrige Lösung, z.B. Lauge handeln.

Vorzugsweise wird der Detektor unter einem Winkel zur Hauptemissionsrichtung der Lichtqelle angeordnet. Der Winkel beträgt etwa 20°- 70°, vorzugsweise 45°- 55°. Da die Restflüssigkeit die Streuung bzw. Brechung des Messlichts erhöht, kann somit die spezifische Empfindlichkeit des Verfahrens verbessert werden. Besonders geeignet ist eine solche Anordnung für Flaschen, bei denen sich die Restflüssigkeit in einem Ring im Bodenbereich ansammelt. Hier wird das Messlicht tangential in den Flüssigkeitsring eingekoppelt, wo es zumindest teilweise aufgrund von Totalreflektion in der Art eines optischen Wellenleiters weitergeleitet wird. Je nach Flaschentyp wird das Licht unter einem bestimmten Winkel grösser als ca. 20° wieder ausgekoppelt. Vorzugsweise wird das ausgekoppelte Licht mittels einer 1:1 Optik auf den Detektor abgebildet.

Weitere Vorteile und Anwendungen der Erfindung ergeben sich aus der nun folgenden Beschreibung anhand der Figuren. Dabei zeigen:
Figur 1 eine Seitenansicht der Ausmessung der Restflüssigkeit und
Figur 2 die Situation nach Fig. 1 von oben.

In Mehrwegflaschen, die vom Verbraucher zum Abfüller zurückkommen, befinden sich meistens Flüssigkeitsreste von einigen Millilitern oder eingetrocknete Reste davon. Solange diese Flüssigkeitsreste der ursprünglich in die Flasche abgefüllten Flüssigkeit entsprechen, ergeben sich keine Probleme. Flaschen, die Reste anderer, unbekannter Flüssigkeiten enthalten, sollten jedoch vor der Wiederverwendung ausgeschieden werden. Im erfindungsgemässen Verfahren wird hierzu die Farbe der Restflüssigkeit mit der Farbe jener Flüssigkeit verglichen, die ursprünglich in die Flasche abgefüllt wurde. So sind zum Beispiel Getränke mit Zitronengeschmack in der Regel farblos, solche mit Orangengeschmack orange und Cola-Getränke weisen die bräunliche Cola-Farbe auf.

Im erfindungsgemässen Verfahren werden die Flaschen zuerst durch eine Etikettenerkennung geleitet. Diese stellt zum Beispiel aufgrund der Etikettenfarbe fest, was für eine Flüssigkeit ursprünglich in die Flasche abgefüllt wurde. Aufgrund dieser Informationen werden Sollwerte für die spätere Messung festgelegt.

Die Etikettenerkennung kann entfallen, wenn in anderer Weise bekannt ist, was für ein Getränk zuletzt in die Flaschen abgefüllt worden ist.

In einem nächsten Schritt kann den Flaschen eine Verdünnflüssigkeit zugeführt werden, da die optische Messmethode auf eine Mindestmenge von Restflüssigkeit von z. B. 5 Millilitern angewiesen ist. Hierzu kann eine Einspritzung vorgesehen sein. Diese kann allen Flaschen, oder nur jenen, die weniger als 5 Milliliter Restflüssigkeit enthalten, Verdünnflüssigkeit beigeben. Als Verdünnflüssigkeit eignet sich zum Beispiel Wasser oder Lauge.

Alternativ können auch alle Flaschen aus dem Prüfprozess ausgeschieden werden, die keine ausreichende Menge von Restflüssigkeit enthalten.

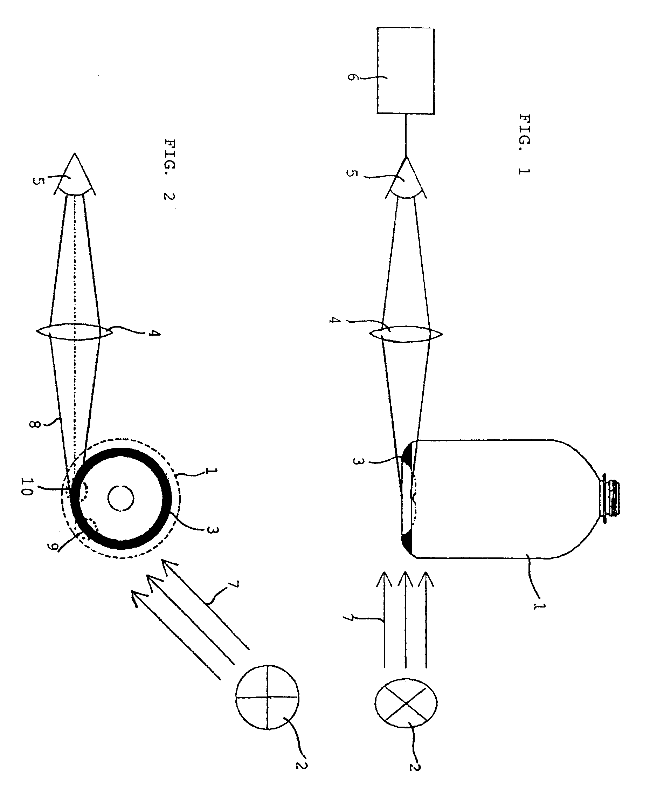

Sodann wird die Flasche der optischen Messvorrichtung zugeführt, die in den Figuren 1 und 2 schematisch illustriert ist.

Hier wird die Flasche 1 mittels einer geeigneten, nicht gezeigten positioniervorrichtung in den Strahlengang von Licht 7 einer Lichtquelle 2 eingesetzt.

Bei Flaschen mit gut ausgebildetem Boden-Dom und entsprechendem Standring befindet sich die Restflüssigkeit 3 in einem ringförmigen Bereich am Flaschenboden, wie er insbesondere aus Fig. 2 ersichtlich ist. Die Flasche wird so positioniert, dass das im wesentlichen parallele Licht der Quelle 2 tangential auf einen Bereich 9 des Rings der Restflüssigkeit 3 trifft. Das einfallende Licht 7 wird in den Ring der Restflüssigkeit 3 eingekoppelt, ähnlich wie bei einem optischen Wellenleiter. In der Restflüssigkeit 3 wird das Licht mehrfach gebrochen und totalreflektiert. Je nach Flaschentyp wird es sodann unter einem Winkel von z.B. etwa 45°- 55° gegenüber der Achse des einfallenden Lichts in einem Bereich 10 wieder ausgekoppelt.

Eine 1:1 Abbildungsoptik 4 bildet das ausfallende Licht 8 auf einen Detektor 5 ab. Der Detektor 5 kann das empfangene Licht im IR- und/oder UV- und/oder im sichtbaren Wellenlängenbereich spektral analysieren, indem zum Beispiel die totalen Lichtleistungen in bestimmten Wellenlängenbereichen gemessen werden oder indem die spektrale Leistungsdichte über einen gegebenen Wellenlängenbereich abgetastet wird.

Licht, das ungebrochen durch den Flaschenboden entlang der Einfallsrichtung austritt, wird dem Detektor 5 nicht zugeführt. Dies erhöht die Empfindlichkeit des Verfahrens, da die Intensität und spektrale Verteilung des abgebeugten Lichts stärker von der Restflüssigkeit und deren Eigenschaften abhängt als jene des nicht abgelenkten Lichtes.

Eine dem Detektor 5 nachfolgende elektronische Auswerteeinheit 6 vergleicht die ermittelten Spektralwerte des ausfallenden Lichts 8 mit den eingangs bestimmen Sollwerten. Bei zu grossen Abweichungen der Sollwerte wird die Flasche ausgeschieden.

Selbstverständlich kann das erfindungsgemässe System auch mit herkömmlichen Methoden (z. B. Spektroskopie in der Gasphase) kombiniert werden, um die Erkennungssicherheit weiter zu erhöhen.

## Patentansprüche

1. Verfahren zur Prüfung einer Mehrwegflasche (1), insbesondere einer Mehrweg-PET-Flasche, auf Verunreinigungen, bei dem optische Eigenschaften einer sich in der Flasche (1) befindlichen Restflüssigkeit (3) gemessen werden, und wobei die Flasche von einer Lichtquelle (2) in einem Bodenbereich beleuchtet und austretendes Licht (8) spektral analysiert wird, dadurch gekennzeichnet, dass in die Flasche (1) einfallendes Licht (7) eine Vorzugsrichtung hat und dass im wesentlichen nur austretendes Licht (8) analysiert wird, welches unter einem minimalen Winkel zur Vorzugsrichtung austritt.

2. Verfahren nach Anspruch 1, dadurch gekennzeichnet, dass ein tiefster Flaschenbereich ungefähr Kreisform aufweist, so dass sich die Restflüssigkeit (3) im wesentlichen in einem Ring sammelt, und dass einfallendes Licht (7) im wesentlichen tangential in einem Einkoppelbereich (9) des Rings in die Restflüssigkeit eingekoppelt wird.

3. Verfahren nach Anspruch 1 oder 2, dadurch gekennzeichnet, dass das aus einem Auskoppelbereich (10) des Rings austretende Licht (8) analysiert wird.

4. Verfahren nach einem der Ansprüche 1 - 3, dadurch gekennzeichnet, dass der Winkel zwischen dem austretenden Licht (8) und der Vorzugsrichtung des einfallenden Lichts (7) 20° - 70° beträgt.

5. Verfahren nach einem der Ansprüche 1 - 3, dadurch gekennzeichnet, dass der Winkel zwischen dem austretenden Licht (8) und der Vorzugsrichtung des einfallenden Lichtes 45°- 55° beträgt.

6. Verfahren nach einem der vorangehenden Ansprüche, dadurch gekennzeichnet, dass aufgrund von Angaben auf der Flasche (1), insbesondere auf deren Etikette, optische Soll-Eigenschaften der Restflüssigkeit (3) bestimmt werden und dass die gemessenen optischen Eigenschaften mit den Soll-Eigenschaften verglichen werden.

7. Verfahren nach einem der vorangehenden Ansprüche, dadurch gekennzeichnet, dass eine Menge einer Verdünnflüssigkeit in die Flasche (1) gegeben wird, derart, dass vor der Messung der optischen Eigenschaften eine minimale Menge Restflüssigkeit (3) in der Flasche vorhanden ist.

8. Verfahren nach einem der vorangehenden Ansprüche, dadurch gekennzeichnet, dass ermittelt wird, ob sich eine minimale Menge von Restflüssigkeit in der Flasche befindet.

9. Vorrichtung zur Durchführung des Verfahrens nach einem der vorangehenden Ansprüche, gekennzeichnet durch eine Lichtquelle (2) zur Erzeugung von Messlicht (7) und einen Detektor (5) zur spektralen Auswertung von aus der Flasche austretendem Messlicht (8), wobei ein Bodenbereich der Flasche (1) im Messlicht (7) positionierbar ist.

10. Vorrichtung nach Anspruch 9, dadurch gekennzeichnet, dass der Detektor (5) eine Abbildungsoptik (4) aufweist.

11. Vorrichtung nach einem der Ansprüche 9 oder 10, dadurch gekennzeichnet, dass der Detektor (5) unter einem Winkel von 20°- 70°, vorzugsweise 45° - 55°, zu einer Hauptemissionsrichtung der Lichtquelle (2) angeordnet ist.
